# EUROPEAN PATENT APPLICATION

(11) **EP 2 621 124 A1**
(43) Date of publication of application: **31.07.2013**
(21) Application number: 12360004.1
(22) Date of filing: 26.01.2012
(51) Int. Cl.: H04L 5/00

(54) **Carrier reconfiguration**

(71) Applicant: Alcatel Lucent, 75007 Paris (FR)
(72) Inventor: Wong, Shin Horng, Chippenham, Wiltshire SN15 3YB (GB); Dhingra, Vikas, Bangalore 560037, Karnataka (IN)
(74) Representative: Script IP Limited

(57) **Abstract**

Methods of reconfiguring carriers of a multi-carrier wireless communication network, user equipment, a base station and computer program products are disclosed. The method of reconfiguring carriers of a multi-carrier wireless communications network in which user equipment is operable to simultaneously communicate using carriers supported by different base stations comprises the steps of: determining, at user equipment, that a reconfiguration is required of carriers currently used to support communication between the user equipment and the different base stations; and transmitting over an uplink between the user equipment and the different base stations a layer 1 message indicating the reconfiguration of carriers. By determining at the user equipment that a reconfiguration of carriers is required and transmitting a layer 1 or physical layer message to the base stations indicating the reconfiguration of carriers, a rapid reconfiguration of those carriers is then possible. By transmitting the layer 1 message to the base stations, all network nodes involved in the multi-carrier communication can be made aware of the reconfiguration. Hence, the format of any feedback information can be changed and each network node involved in the multi-carrier communication can infer from the layer 1 message what format will be used so that reliable decoding of that information can continue to occur. This approach therefore enables the rapid reconfiguration of carriers to occur whilst still enabling reliable communication.

## Description

### FIELD OF THE INVENTION

The present invention relates to methods of reconfiguring carriers of a multi-carrier wireless communication network, user equipment, a base station and computer program products.

### BACKGROUND

Single carrier wireless telecommunications systems are known. In those known systems, radio coverage is provided to user equipment, for example mobile telephones, by geographical area. A base station is located in each geographical area to provide the required radio coverage. User equipment in the area or cell served by a base station receives information and data from the base station and transmits information and data to the base station. In a High-Speed Downlink Packet Access (HSDPA) telecommunications network, data and information is sent between user equipment and a base station in data packets on a radio frequency carrier.

Information and data transmitted by the base station to the user equipment occurs on radio frequency carriers known as downlink carriers. Information and data transmitted by user equipment to the base station occurs on radio frequency carriers known as uplink carriers. Hence, in addition to HS-DPA in the downlink, High Speed Uplink Packet Access (HS-UPA) is also provided in the uplink.

In known wireless telecommunications systems operating in a single carrier mode, user equipment can move between cells. Service provided to user equipment is overseen by a Radio Network Controller (RNC). The RNC communicates with user equipment and base stations and determines which cell each user equipment is primarily connected to. Furthermore, the RNC acts to control and communicate with a base station and user equipment when user equipment moves from a cell served by one base station to a cell served by another base station.

It has been proposed to allow base stations and user equipment to each transmit simultaneously on more than one carrier. Furthermore, it has been proposed to allow user equipment and base stations to receive simultaneously on more than one carrier. Each carrier, both uplink and downlink, is typically independently power controlled by a base station. Provision of more than one downlink carrier, for example on four frequency carriers, allows for an increase in data throughput to the user equipment. Networks having more than two carriers may be referred to as "Multi Cell High-Speed Downlink Packet Access" (MC-HSDPA) networks. The term "multi-carrier" network used herein is envisaged to cover the case where two (e.g. Dual Cell HSDPA and Dual cell HSUPA), three, four or more downlink (or uplink) carriers are provided for in a network.

It has recently been proposed to provide for multi-point transmission for HSDPA (MP-HSDPA) where user equipment receives HSDPA transmissions from more than one cell belonging to different base stations. These MP-HSDPA transmissions can occur on carriers having the same frequency or different frequencies and they can be of different High Speed Downlink Shared Channel (HS-DSCH) streams.

The provision of the multi-carrier or multi-point functionality discussed above may have associated problems. Accordingly, it is desired to improve the operation of a wireless telecommunications network.

### SUMMARY

According to a first aspect, there is provided a method of reconfiguring carriers of a multi-carrier wireless communications network in which user equipment is operable to simultaneously communicate using carriers supported by different base stations, the method comprising the steps of: determining, at user equipment, that a reconfiguration is required of carriers currently used to support communication between the user equipment and the different base stations; and transmitting over an uplink between the user equipment and the different base stations a layer 1 message indicating the reconfiguration of carriers.

The first aspect recognises that a problem with multi-carrier or multi-point networks is enabling rapid and reliable reconfiguration in the number of carriers. In particular, the first aspect recognises that it is difficult to reconfigure the number of carriers used rapidly whilst also enabling carriers to reliably carry data. This is because any changes in the configuration of the carriers will result in a change in the format of the messaging providing feedback on the reception of those carriers. In particular, the encoding format of the feedback messaging changes based on the number of carriers being used. Also, there is no facility within the format to indicate how many carriers are being used since it is assumed that both the user equipment and base stations are aware of this. Hence, any rapid change in the configuration of the carriers will result in a change in the format of the feedback information. If any base stations decoding that feedback information are unaware of the change in format, then incorrect decoding of that information will occur. Although one approach to mitigate against this problem would be to utilise a higher level network node, such as a radio network controller or equivalent, to inform base stations during any reconfiguration of the carriers, a problem with that approach is that this significantly delays the speed at which the carrier reconfiguration can occur.

Accordingly, a method of reconfiguring carriers of a multi-carrier or multi-point wireless communication network is provided. A multi-carrier or multi-point wireless communication network is one in which user equipment may simultaneously communicate using carriers which are supported by different base stations. The method may comprise the step of, at user equipment, determining that a reconfiguration of carriers that can be used to support communication between the user equipment and its serving base stations is required. The method may also comprise the step of transmitting a layer 1 or physical layer message indicating the reconfiguration of carriers over an uplink between the user equipment and the serving base stations.

By determining at the user equipment that a reconfiguration of carriers is required and transmitting a layer 1 or physical layer message to the base stations indicating the reconfiguration of carriers, a rapid reconfiguration of those carriers is then possible. This is because the layer 1 message may be transmitted directly between the user equipment and the base stations without involving any other network nodes, such as the radio network controller or equivalent. In addition, by transmitting the layer 1 message to the base stations, all network nodes involved in the multi-carrier communication can be made aware of the reconfiguration. Hence, the format of any feedback information can be changed and each network node involved in the multi-carrier communication can infer from the layer 1 message what format will be used so that reliable decoding of that information can continue to occur. This approach therefore enables the rapid reconfiguration of carriers to occur whilst still enabling reliable communication.

In one embodiment, the multi-carrier wireless communications network is one in which user equipment is operable to simultaneously communicate using carriers on identical frequencies supported by different base stations.

In one embodiment, the different base stations comprise base stations from the user equipment's active set. It will be appreciated that although the cells participating in MP-HSDPA are likely to be from the active set, not all cells in the active set may participate in MP-HSDPA. Accordingly, in one embodiment, the different base stations comprise base stations supporting cells participating in MP-HSDPA.

In one embodiment, the reconfiguration of carriers comprises one of an activation and a deactivation of at least one carrier used to support communication between the user equipment and the different base stations. Accordingly, the reconfiguration may comprise either an activation or a deactivation of one or more carriers of the different or serving base stations. Hence, it is possible to rapidly and reliably add or remove a carrier.

In one embodiment, the reconfiguration of carriers comprises one of an activation and a deactivation of at least one secondary carrier used to support communication between the user equipment and the different base stations. Accordingly, secondary carriers may be rapidly and reliably added or removed.

In one embodiment, the reconfiguration of carriers comprises one of an activation and a deactivation of a plurality of secondary carriers used to support communication between the user equipment and the different base stations. Accordingly, more than one secondary carrier may be added or removed rapidly and reliably.

In one embodiment, the layer 1 message is encoded in data provided by the High Speed Dedicated Physical Control Channel (HS-DPCCH), the data indicating the reconfiguration of carriers. Utilising the HS-DPCCH to provide the indication of the reconfiguration of carriers is particularly effective since all network nodes who may participate in multi-carrier communication with the user equipment will be monitoring that channel. This avoids needing to create a new channel or add further messages to provide the indication of the reconfiguration.

In one embodiment, the layer 1 message is encoded as pre-configured values of parameters provided by the High Speed Dedicated Physical Control Channel which indicate the reconfiguration of carriers. Accordingly, parameters provided by the HS-DPCCH may be configured to provide the indication of the reconfiguration of carriers. For example, particular values of those parameters or combinations of values of those parameters may be pre-associated with particular reconfigurations. Receipt of those values or combination of values of those parameters can then be interpreted as an indication that a reconfiguration of carriers is required. Again, this enables the indication to be provided using existing messaging and avoids the need to generate additional or new messages.

In one embodiment, the pre-configured values of parameters comprise non-typical values of the parameters. In order to reduce the likelihood of false indications of a reconfiguration, those values of the parameters which have an extremely low probability of occurring are utilised to encode the reconfiguration information.

In one embodiment, the layer 1 message is encoded as a sequence of pre-configured values of parameters in the High Speed Dedicated Physical Control Channel which indicate the reconfiguration of carriers. In order to reduce the probability of false indications being provided and in order to provide additional information relating to the reconfiguration of carriers required, rather than just using single combinations of parameter values, a sequence of such combined parameter values may be provided.

In one embodiment, the sequence of pre-configured values of parameters comprise a non-typical sequence of values of the parameters.

In one embodiment, the layer 1 message is encoded in data provided by the High Speed Dedicated Physical Control Channel associated with a carrier to be reconfigured. Accordingly, a reconfiguration, such as a deactivation, of a carrier may be indicated by encoding the indication using the parameters associated with that particular carrier within the HS-DPCCH.

In one embodiment, the parameters comprise at least one of channel quality indication (CQI), hybrid automatic retransmission request ACKnowledgement/Negative ACKnowledgement information (ACK/NACK) and a Precoding Control Indication (PCI). It will be appreciated that other parameters or combinations of parameters may be used.

In one embodiment, the method comprises the step of waiting for an acknowledgement from the different base stations indicating receipt of the layer 1 message prior to executing the reconfiguration of carriers. In order to further improve the robustness of the reconfiguration and to avoid the likelihood of a reconfiguration occurring without all base stations being aware due to, for example, the layer 1 message not being received, the user equipment waits for acknowledgements from all base stations before performing the reconfiguration.

In one embodiment, the acknowledgement comprises a High Speed Shared Control Channel order.

In one embodiment, the method comprises the step of transmitting a further layer 1 message to the different base stations indicating that the reconfiguration of carriers is to occur. Accordingly, when acknowledgments are expected from base stations then a further message needs to be provided to indicate to all the base stations that acknowledgements have been received and that the reconfiguration can take place.

In one embodiment, at least one of the layer 1 message and the further layer 1 message provides an indication of when the reconfiguration of carriers is to occur. Accordingly, an indication may be provided of when the reconfiguration is to occur.

In one embodiment, the method comprises the step of encoding information sent over the High Speed Dedicated Physical Control Channel in a format corresponding to the reconfiguration of carriers. Accordingly, once the reconfiguration of carriers has occurred then the change in format of the HS-DPCCH can then occur and information is sent in the format which corresponds with the new configuration.

In one embodiment, when the different base stations are pre-configured to monitor for transmissions at pre-configured intervals, the step of transmitting occurs at at least one of the pre-configured intervals. Accordingly, each base station may be preconfigured to monitor for the reconfiguration at pre-set intervals or the reconfiguration of a carrier may be communicated at a time when the base stations are capable of receiving that indication (such as during an active period of their discontinuous receive cycle). This ensures that the reconfiguration message is reliably received.

In one embodiment, the step of determining comprises receiving an High Speed Shared Control Channel order from a base station indicating the reconfiguration. Accordingly, the reconfiguration may be initiated by one of the serving base stations within the user equipment's active set.

In one embodiment, the method comprises the step of preventing transmission of an ACK/NACK by the user equipment in response to the High Speed Shared Control Channel order. When such an HS-SCCH order is received it would typically be necessary to transmit an ACK/NACK message back to the requesting base station to acknowledge receipt of that HS-SCCH order. However, the transmission of such a message can be avoided since the subsequent transmission of the layer 1 message effectively acts as that ACK/NACK message, thereby saving time and resources.

According to a second aspect, there is provided user equipment operable to simultaneously communicate using reconfigurable carriers supported by different base stations of a multi-carrier wireless communications network, the user equipment comprising: determining logic operable to determine that a reconfiguration is required of carriers currently used to support communication between the user equipment and the different base stations; and transmission logic operable to transmit over an uplink between the user equipment and the different base stations a layer 1 message indicating the reconfiguration of carriers.

In one embodiment, the multi-carrier wireless communications network is one in which the user equipment is operable to simultaneously communicate using carriers on identical frequencies supported by different base stations.

In one embodiment, the different base stations comprise base stations from the user equipment's active set.

In one embodiment, the reconfiguration of carriers comprises one of an activation and a deactivation of at least one carrier used to support communication between the user equipment and the different base stations.

In one embodiment, the reconfiguration of carriers comprises one of an activation and a deactivation of at least one secondary carrier used to support communication between the user equipment and the different base stations.

In one embodiment, the reconfiguration of carriers comprises one of an activation and a deactivation of a plurality of secondary carriers used to support communication between the user equipment and the different base stations.

In one embodiment, the layer 1 message is encoded in data provided by a High Speed Dedicated Physical Control Channel, the data indicating the reconfiguration of carriers.

In one embodiment, the layer 1 message is encoded as pre-configured values of parameters provided by the High Speed Dedicated Physical Control Channel which indicate the reconfiguration of carriers.

In one embodiment, the pre-configured values of parameters comprise non-typical values of the parameters.

In one embodiment, the layer 1 message is encoded as a sequence of pre-configured values of parameters in the High Speed Dedicated Physical Control Channel which indicate the reconfiguration of carriers.

In one embodiment, the sequence of pre-configured values of parameters comprise a non-typical sequence of values of the parameters.

In one embodiment, the layer 1 message is encoded in data provided by the High Speed Dedicated Physical Control Channel associated with a carrier to be reconfigured.

In one embodiment, the parameters comprise at least one of CQI, ACK/NACK and PCI.

In one embodiment, the determining logic is operable to wait for an acknowledgement from the different base stations indicating receipt of the layer 1 message prior to executing the reconfiguration of carriers.

In one embodiment, the acknowledgement comprises a High Speed Shared Control Channel order.

In one embodiment, the transmission logic is operable to transmit a further layer 1 message to the different base stations indicating that the reconfiguration of carriers is to occur.

In one embodiment, at least one of the layer 1 message and the further layer 1 message provides an indication of when the reconfiguration of carriers is to occur.

In one embodiment, the transmission logic is operable to encode information sent over the High Speed Dedicated Physical Control Channel in a format corresponding to the reconfiguration of carriers. Accordingly, once the reconfiguration of carriers has occurred then the change in format of the HS-DPCCH can then occur and information is sent in the format which corresponds with the new configuration.

In one embodiment, when the different base stations are pre-configured to monitor for transmissions at pre-configured intervals, the transmission logic is operable to transmit at at least one of the pre-configured intervals.

In one embodiment, the determining logic is operable to receive an High Speed Shared Control Channel order from a base station indicating the reconfiguration.

In one embodiment, the transmission logic is operable to prevent transmission of an ACK/NACK by the user equipment in response to the High Speed Shared Control Channel order.

According to a third aspect, there is provided a method of reconfiguring carriers of a multi-carrier wireless communications network in which user equipment is operable to simultaneously communicate using carriers supported by different base stations, the method comprising the steps of: receiving, at a base station over an uplink from the user equipment to the base stations, a layer 1 message indicating the reconfiguration of carriers.

In one embodiment, the multi-carrier wireless communications network is one in which user equipment is operable to simultaneously communicate using carriers on identical frequencies supported by the different base stations.

In one embodiment, the different base stations comprise base stations from the user equipment's active set.

In one embodiment, the reconfiguration of carriers comprises one of an activation and a deactivation of at least one carrier used to support communication between the user equipment and the base station.

In one embodiment, the reconfiguration of carriers comprises one of an activation and a deactivation of at least one secondary carrier used to support communication between the user equipment and the base station.

In one embodiment, the reconfiguration of carriers comprises one of an activation and a deactivation of a plurality of secondary carriers used to support communication between the user equipment and the base station.

In one embodiment, the layer 1 message is encoded in data provided by a High Speed Dedicated Physical Control Channel, the data indicating the reconfiguration of carriers.

In one embodiment, the layer 1 message is encoded as pre-configured values of parameters provided by the High Speed Dedicated Physical Control Channel which indicate the reconfiguration of carriers.

In one embodiment, the pre-configured values of parameters comprise non-typical values of the parameters.

In one embodiment, the layer 1 message is encoded as a sequence of pre-configured values of parameters in the High Speed Dedicated Physical Control Channel which indicate the reconfiguration of carriers.

In one embodiment, the sequence of pre-configured values of parameters comprise a non-typical sequence of values of the parameters.

In one embodiment, the layer 1 message is encoded in data provided by the High Speed Dedicated Physical Control Channel associated with a carrier to be reconfigured.

In one embodiment, the parameters comprise at least one of CQI, ACK/NACK and PCI.

In one embodiment, the method comprises the step of transmitting an acknowledgement of receipt of the layer 1 message prior to executing the reconfiguration of carriers.

In one embodiment, the acknowledgement comprises a High Speed Shared Control Channel order.

In one embodiment, the method comprises the step of receiving a further layer 1 message indicating that the reconfiguration of carriers is to occur.

In one embodiment, at least one of the layer 1 message and the further layer 1 message provides an indication of when the reconfiguration of carriers is to occur.

In one embodiment, the method comprises the step of receiving information sent over the High Speed Dedicated Physical Control Channel in a format corresponding to the reconfiguration of carriers. Accordingly, once the reconfiguration of carriers has occurred then the change in format of the HS-DPCCH can then occur and information is received in the format which corresponds with the new configuration

In one embodiment, the method comprises the step of monitoring for transmissions at pre-configured intervals.

In one embodiment, the method comprises the step of transmitting an High Speed Shared Control Channel order indicating the reconfiguration.

In one embodiment, the method comprises the step of preventing awaiting receipt of an ACK/NACK by the user equipment in response to the High Speed Shared Control Channel order.

According to a fourth aspect, there is provided a base station operable to reconfigure carriers of a multi-carrier wireless communications network in which user equipment is operable to simultaneously communicate using carriers supported by different base stations, the base station comprising: reception logic operable to receive over an uplink from the user equipment to the base station, a layer 1 message indicating the reconfiguration of carriers.

In one embodiment, the multi-carrier wireless communications network is one in which user equipment is operable to simultaneously communicate using carriers on identical frequencies supported by the different base stations.

In one embodiment, the different base stations comprise base stations from the user equipment's active set.

In one embodiment, the reconfiguration of carriers comprises one of an activation and a deactivation of at least one carrier used to support communication between the user equipment and the base station.

In one embodiment, the reconfiguration of carriers comprises one of an activation and a deactivation of at least one secondary carrier used to support communication between the user equipment and the base station.

In one embodiment, the reconfiguration of carriers comprises one of an activation and a deactivation of a plurality of secondary carriers used to support communication between the user equipment and the base station.

In one embodiment, the layer 1 message is encoded in data provided by a High Speed Dedicated Physical Control Channel, the data indicating the reconfiguration of carriers.

In one embodiment, the layer 1 message is encoded as pre-configured values of parameters provided by the High Speed Dedicated Physical Control Channel which indicate the reconfiguration of carriers.

In one embodiment, the pre-configured values of parameters comprise non-typical values of the parameters.

In one embodiment, the layer 1 message is encoded as a sequence of pre-configured values of parameters in the High Speed Dedicated Physical Control Channel which indicate the reconfiguration of carriers.

In one embodiment, the sequence of pre-configured values of parameters comprise a non-typical sequence of values of the parameters.

In one embodiment, the layer 1 message is encoded in data provided by the High Speed Dedicated Physical Control Channel associated with a carrier to be reconfigured.

In one embodiment, the parameters comprise at least one of CQI, ACK/NACK and PCI.

In one embodiment, the base station comprises transmission logic operable to transmit an acknowledgement of receipt of the layer 1 message prior to executing the reconfiguration of carriers.

In one embodiment, the acknowledgement comprises a High Speed Shared Control Channel order.

In one embodiment, the reception logic is operable to receive a further layer 1 message indicating that the reconfiguration of carriers is to occur.

In one embodiment, at least one of the layer 1 message and the further layer 1 message provides an indication of when the reconfiguration of carriers is to occur.

In one embodiment, the reception logic is operable to receive information sent over the High Speed Dedicated Physical Control Channel in a format corresponding to the reconfiguration of carriers. Accordingly, once the reconfiguration of carriers has occurred then the change in format of the HS-DPCCH can then occur and information is received in the format which corresponds with the new configuration

In one embodiment, the reception logic is operable to monitor for transmissions at pre-configured intervals.

In one embodiment, the base station comprises transmission logic operable to transmit an High Speed Shared Control Channel order indicating the reconfiguration.

In one embodiment, the transmission logic is operable to prevent awaiting receipt of an ACK/NACK by the user equipment in response to the High Speed Shared Control Channel order.

According to a fifth aspect, there is provide a computer program product operable, when executed on a computer, to perform the method steps of the first or the third aspects.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a wireless telecommunications system according to one embodiment;
Figure 2 illustrates communication layers between the network and the user equipment;
Figure 3 illustrates user equipment operating in MP-HSDPA with three inter-base station cells; and
Figure 4 illustrates messaging between user equipment and cells according to one embodiment.

### DESCRIPTION OF THE EMBODIMENTS

### Network Overview

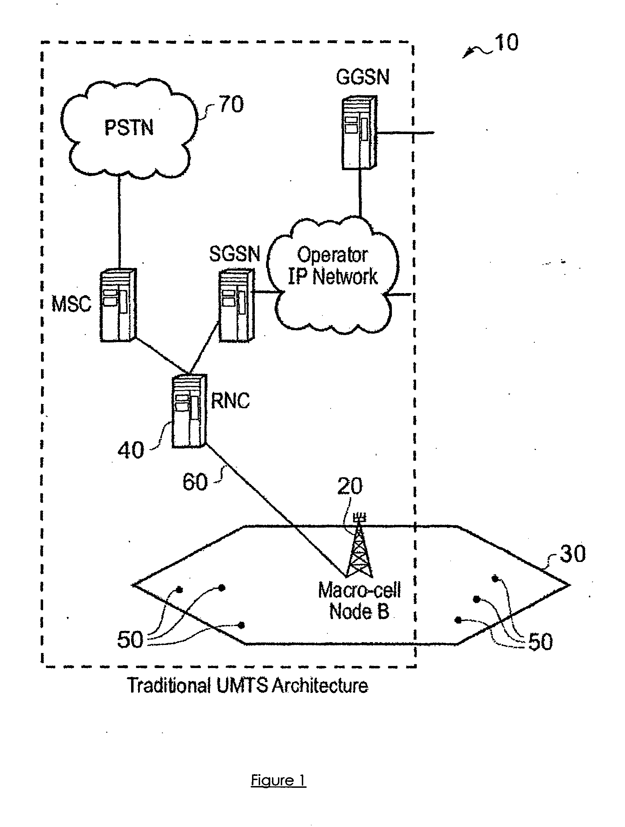

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The radio access network of the wireless communications system is managed by a radio network controller (RNC) 40. The radio network controller 40 controls operation of the wireless communications system by communicating with a plurality of base stations over a backhaul communications link 60. The network controller also communicates with user equipment 50 via each base station.

A radio network controller 40 maintains a neighbour list which includes information about geographical relationships between sectors supported by base stations 20. In addition, the radio network controller 40 maintains location information which provides information on the location of user equipment 50 within the wireless communication system 10. The radio network controller is operable to route traffic via circuit switched and packet switched networks. Hence, a mobile switching centre is provided with which the radio network controller may communicate. The mobile switching centre can communicate with a circuit switched network such as a public switched telephone network (PSTN) 70. Similarly, a network controller can communicate with service general package radio service support nodes (SGSNs) and a gateway general packet support node (GGSN). The GGSN can communicate with a packet switched core such as for example, the Internet.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the radio network controller 40, allocates resources to user equipment in a manner that aims to optimise operation of the wireless telecommunications network 10.

### High Speed Downlink Packet Access

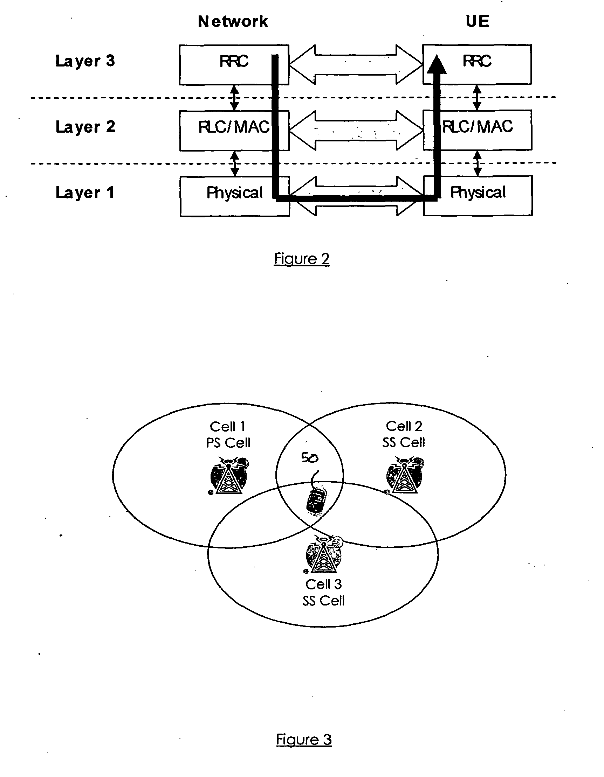

In Universal Mobile Telecommunications System (UMTS), a Multi-Cell High Speed Downlink Packet Access (MC-HSDPA) arrangement is provided. In MC-HSDPA, a sector is defined as the geographical coverage area of a base station or Node B. A sector can consist of several cells, where each cell aims to cover the same geographical coverage as the sector and uses a separate frequency carrier for its transmission. The frequency carrier can be within the same frequency band or distributed over two frequency bands. MC-HSDPA is an extension to Dual Cell High Speed Downlink Packet Access (DC-HSDPA). In the more generalised multi-point HSDPA (MP-HSDPA) arrangement, carriers from different cells may be provided on the same frequency. In this case, scrambling codes are applied to provide for separation between these carriers. In particular, in multi-point transmission for HSDPA (MP-HSDPA) the user equipment is able to receive HSDPA transmissions from two or more cells that belong to different base stations, as illustrated schematically in Figure 3. These HSDPA transmissions occur on the same frequency or on different frequencies, but always from more than one cell, and can be provided within different HS-DSCH streams. The main serving cell of the user equipment in an MP-HSDPA arrangement is called the Primary Serving (PS) cell and the other cells which provide secondary HSDPA signals are called Secondary Serving (SS) cells.

In MP-HSDPA and MC-HSDPA, user equipment can receive up to eight simultaneous downlink transmissions from eight different cells. Hence, MP-HSDPA and MC-HSDPA can potentially increase the downlink throughput of DC-HSDPA and (Single Cell) HSDPA by a factor of four and eight respectively. MC-HSDPA is also sometimes referred to as 8C-HSDPA (eight Cell HSDPA), 4C-HSPA or 3C-HSDPA when the user equipment receives simultaneous transmissions from eight, four or three cells respectively.

In a multi-carrier system, each carrier will have independent downlink radio links from a base station to user equipment. Those downlink radio links are managed independently since each carrier will likely have different radio propagation paths to user equipment. For HSDPA systems capable of operating in multi-carrier mode, more than two downlink carriers may be provided. It will be appreciated that in a multi-carrier network, the number of downlink carriers may not match the number of uplink carriers. Furthermore, the number of downlink carriers provided may not be exactly double the number of uplink carriers provided. In HSDPA multi-carrier mode, each sector served by a base station can have several "carriers" associated therewith. A carrier or cell supported by a carrier covers the same geographical region as a sector.

In MP-HSDPA and MC-HSDPA, the primary carrier is the cell that carries essential control channels and it cannot be deactivated. There is only one primary carrier and the other cells are called secondary carriers (e.g. Secondary Carrier 1, Secondary Carrier 2 and Secondary Carrier 3).

Control of the carriers can be effected using an HS-SCCH (High Speed Shared Control Channel) order. The HS-SCCH order is layer 1 signalling from the supporting base station to user equipment that allows fast commands/orders to be made. Apart from deactivation/activation of secondary carriers, HS-SCCH orders can also be used to turn on discontinuous transmission and reception.

Generally, communications between nodes happen over several layers. In the HSPA Radio Access Network (RAN), there are 3 layers of communication between the network and the User Equipment as shown in Figure 2. Layer 3 is the Radio Resource Control (RRC), Layer 2 consists of the Radio Link Control and the Medium Access Control and Layer 1 is the Physical Layer. Each layer in the network or User Equipment will send messages intended only to the same layer in the User Equipment or network. For example, a RRC message (Layer 3 message) from the network is only intended for the RRC at the User Equipment. Apart from the Physical Layer (Layer 1), all other layers' messages cannot be sent directly to the corresponding layer on the other node. For example a Layer 3 message from the network needs to pass through Layer 2 and Layer 1 before it can be sent to the User Equipment. At the User Equipment the message is received at Layer 1 and passes through Layer 2 before reaching its destination in Layer 3. The path taken by this Layer 3 message in this example is shown in the arrow 100 in Figure 2.

Usually, the RRC layer at the network sends configuration messages to order the User Equipment to perform certain task (e.g. handover to another cell). The RRC layer is controlled by the Radio Network Controller 40, which is physically separated from the Node B (NB). Hence RRC messages are usually slow. The orders can be speeded up by sending these orders from the base station at the Physical layer (i.e. Layer 1) since the base station can directly communicate with the User Equipment at the Physical layer. In HSPA, HS-SCCH (High Speed Shared Control Channel), a Layer 1 message, is used to carry orders to the User Equipment. The HS-SCCH order enables decisions made at the base station and network to reach the User Equipment quickly. Features like Fast Serving Cell Change allowing the User Equipment to quickly handover to a cell benefits from having HS-SCCH orders. The HS-SCCH order is also used to turn on/off the Discontinuous Transmission (DTX) and Discontinuous Reception (DRX) feature in the User Equipment. In 4 Carrier HSDPA (4C-HSDPA), the HS-SCCH order is used to activate or deactivate secondary carriers in the User Equipment.

The HS-SCCH order is sent from the base station to the user equipment. It is beneficial to the User Equipment if it can also send a Layer 1 message to carry an order or a request to the base station. Unlike the HS-SCCH order, in addition to being received the serving cell, any uplink order also needs to be received by non-serving cells (i.e. cells that are not the main serving cell). A drawback of the HS-SCCH order is that the base station needs to inform the non-serving cells via the RNC 40 of any changes to user equipment, which causes delay. An example of this is the activation/deactivation of an uplink secondary carrier in DC-HSUPA (Dual Cell High Speed Uplink Packet Access), where the base station needs to inform the RNC 40 of the activation/deactivation so that the RNC 40 can propagate this information to all the non-serving cells belonging to the user equipment. Hence, for orders/requests that affects non-serving cell, it is important that the uplink order also reaches all non-serving cells.

As mentioned above, the HS-SCCH order is an instruction at the physical layer which enables the base stations to perform fast radio reconfigurations of the user equipment. For those networks using multiple carriers, an HS-SCCH order is used to activate/deactivate secondary carriers. The user equipment uses the High Speed Dedicated Physical Control Channel (HS-DPCCH) to provide ACK/NACK for HSDPA packets and CQI feedback for each carrier to the respective base stations. This is achieved by transmitting these values in accordance with a predetermined format depending on the number of carriers being used. A change in the number of carriers will result in a change in the HS-DPCCH format.

When using an HS-SCCH order to activate/deactivate a secondary serving cell in MP-HSDPA supported by different base stations (inter-base station MP-HSDPA), cells are unaware of an HS-SCCH order issued by another cell since the HS-SCCH order is performed at the physical level. For example, a secondary serving cell may issue an HS-SCCH order to deactivate a secondary carrier of the user equipment and cease sending HSDPA packets to that user equipment. In response to this, the user equipment will change its HS-DPCCH format to correspond with a format for a single carrier. Since the primary serving cell is unaware of the change to the number of carriers, it will continue to decode the HS-DPCCH assuming that it is formatted for two carriers and would obtain incorrect information.

One approach to this problem is to inform the RNC after an HS-SCCH order is issued. The RNC can then inform the other cells participating in MP-HSDPA of the change in the activation status of the carriers. The problem with this solution is that there is a delay in communication between the RNC and the different base stations of the active set and, during this time, the HS-DPCCH may be decoded with the incorrect format. Also, it is possible for a primary serving cell to deactivate a secondary serving cell and, during this delay, the secondary serving cell may continue to transmit unnecessary HSDPA packets to the user equipment, leading to a waste of resources and adding to interference.

An alternative solution is for the base station to inform the RNC prior to issuing an HS-SCCH order. The RNC may then inform the other base stations participating in MP-HSDPA of an upcoming change to the activation status of the carriers. The RNC can also indicate a specific time when this change should occur and the base station issuing the order will ensure that its order is sent at the correct time. A problem with this solution is that it will also introduce delay in sending the HS-SCCH order. The benefit of the HS-SCCH order is to enable rapid radio reconfiguration at the user equipment and any delay deletes the benefit of using the HS-SCCH order.

### Overview

Before discussing embodiments in any more detail, first an overview of the present technique will be provided. In order to provide for rapid reconfiguration of the carriers, the user equipment sends a layer 1 or MAC signal indicating a change to the status or reconfiguration of the carriers. In those embodiments where it is not possible to activate or deactivate the primary carrier, the reconfiguration is of the secondary carriers.

This approach uses the user equipment rather than the RNC to inform the base stations participating in MP-HSDPA of the change in the carrier status, which is faster than going via the RNC. The base stations participating in MP-HSDPA for that user equipment are configured to detect the occurrence of such a layer 1 or MAC signal which includes an indication relating to a change in the carriers. Using this approach, a reconfiguration of the carriers can be effected by a message from the user equipment, which would be detected by the associated base stations. This enables more rapid reconfiguration to occur than would be possible using the RNC.

Accordingly, in one approach, one of the base stations providing an MP-HSDPA carrier issues an HS-SCCH order to initiate a change to the activation status of the carriers such as, for example, the secondary carriers. At this stage, the user equipment would not change the HS-DPCCH format but would continue to use the HS-DPCCH format used prior to receiving the HS-SCCH order. This ensures that the information provided over the HS-DPCCH continues to be transmitted in a format which matches that expected by the recipients and enables the receiving base stations to accurately decode the request to initiate a change in the activation status of the carriers.

Typically, the user equipment then optionally waits for an acknowledgement from the base stations participating in MP-HSDPA that they have received the request to change the activation status of the carriers. This provides further assurance to the user equipment that all participants are aware of the changes that are about to be made.

Typically, the user equipment then either changes the HS-DPCCH format at a predetermined time, or the user equipment sends a further layer 1 message indicating that the requested change in activation status of the carriers should be effected now or at a predetermined time. The predetermined time may be either a standard time after sending the layer 1 message to the base stations or is indicated in the layer 1 message sent to the base stations. When the change in activation status occurs, the user equipment changes the HS-DPCCH format to match.

Typically, the indication of a change to a secondary carrier is encoded as a special code word in the HS-DPCCH. The base stations are provisioned with the code word or a set of code words, together with an indication of what action is required in response to those code words.

Typically, the indication is a sequence of code words encoded in the HS-DPCCH. In other words, the indication consists of a sequence of code words encoded in the HS-DPCCH. One example is to send PRE and CQI = 0 for all carriers followed by POST and CQI=MAX (where MAX is the maximum CQI value of the CQI table used by the user equipment) for all cells and this is repeated N times. PRE and POST are one of the HARQ ACK's parameters that can be transmitted in HS-DPCCH. Other patterns and code words are of course possible.

In order to reduce the probability of the occurrence of such code words, it is desirable to use sequences which consist of extremes of values (for example, a change in CQI from 0 to MAX) which are non-typical values that would not normally occur in normal operation. The PCI field can also be used to encode a code word in the case where Multiple Input Multiple Output (MIMO) operation is configured.

Also, it is possible to encode a sequence pattern which acts like a Morse code to relay information detailing which carrier is to be activated or deactivated. For example, the sequence (like a Morse code) can tell the other base stations which carriers are to be activated and/or which are to be deactivated.

Typically, the acknowledgement is received from the base stations using an HS-SCCH order. That acknowledgement typically includes the same requested change in activation status of the carriers as that provided by the original HS-SCCH order which requested the change in activation status. The user equipment can further indicate to all MP-HSDPA base stations that it has received acknowledgements from all base stations using, for example, another pattern or sequence encoding in the HS-DPCCH.

Typically, where a carrier is to be deactivated, the code word is encoded in the parameters of the HS-DPCCH used for the carrier which is to be deactivated. This allows the other carriers to continue to provide HSDPA packets to the user equipment. For example, if a secondary serving cell sends an HS-SCCH order to the user equipment indicating that it wishes to deactivate itself, the user equipment will send a pattern sequence consisting of PRE and CQI=0 followed by POST and CQI=30 only within those parameters of the HS-DPCCH which are used to transmit information relating to that secondary serving cell. This information may be repeated, for example, *N* times. Meanwhile, the user equipment continues to provide normal HS-DPCCH feedback for the primary serving cell and any other secondary serving cells. The primary serving cell and any other secondary serving cells will detect the pattern within the parameters relating to the secondary serving cell and will realise that the secondary serving cell has deactivated itself and will expect a change in format after receiving N such patterns. Alternatively, the primary serving cell can send an acknowledgement in the form of an HS-SCCH order to the user equipment after receiving N patterns and expect a change in HS-DPCCH format thereafter.

A secondary serving cell that is deactivated will need to continuously detect HS-DPCCH from the user equipment since it does not know when it may be reactivated. Although a secondary serving cell would likely be a member of the user equipment's active set and will need to monitor uplink transmissions from this user equipment, constant monitoring of HS-DPCCH would consume resources at the base station. Hence, in one embodiment, the user equipment only transmits HS-DPCCH for a specific time period and this allows the deactivated secondary serving cell to perform discontinuous reception (DRX) on HS-DPCCH. That is, for an HS-SCCH order that involves activation of a secondary serving cell, an HS-DPCCH Discontinuous Transmit (DTX) is applied. For example, upon receiving the HS-SCCH order, the user equipment will be permitted to transmit N patterns of HS-DPCCH every M radio frames. The user equipment may only transmit any change in the activation status of the carriers within the specific time period and may transmit normal parameters for the rest of the time.

In one embodiment, base stations are only allowed to issue an HS-SCCH order to activate/deactivate secondary serving cells at a predefined time. The predefined time is known to all base stations in the MP-HSDPA set. This allows deactivated secondary serving cells to listen for information encoded in the HS-DPCCH only during those predefined time periods and thereby save resources. The time period may be cyclical (for example, once every 10 radio frames).

Typically, the user equipment need not transmit a conventional ACK/NACK in response to the HS-SCCH order received which requested the change in carrier status. The transmission of such a response is prevented and the acknowledgement comes in the form of the HS-DPCCH sequence pattern. The base station issuing the HS-SCCH order would expect the user equipment to transmit such an HS-DPCCH sequence pattern and hence would know that the user equipment has received the order when it detects this sequence pattern and therefore a formal acknowledgement from the user equipment is redundant.

Next, specific examples of embodiments will now be described.

### Example 1

Figure 3 shows user equipment operating in MP-HSDPA with three inter-base station cells, namely Cell 1, Cell 2 and Cell 3. Cell 1 is the primary serving cell. Cells 2 and 3 are the secondary serving cells. Each cell transmits on the same frequency. All cells transmit HSDPA packets to the user equipment 50. This arrangement assumes that MIMO is not used. It is also assumed that the maximum CQI value is 30.

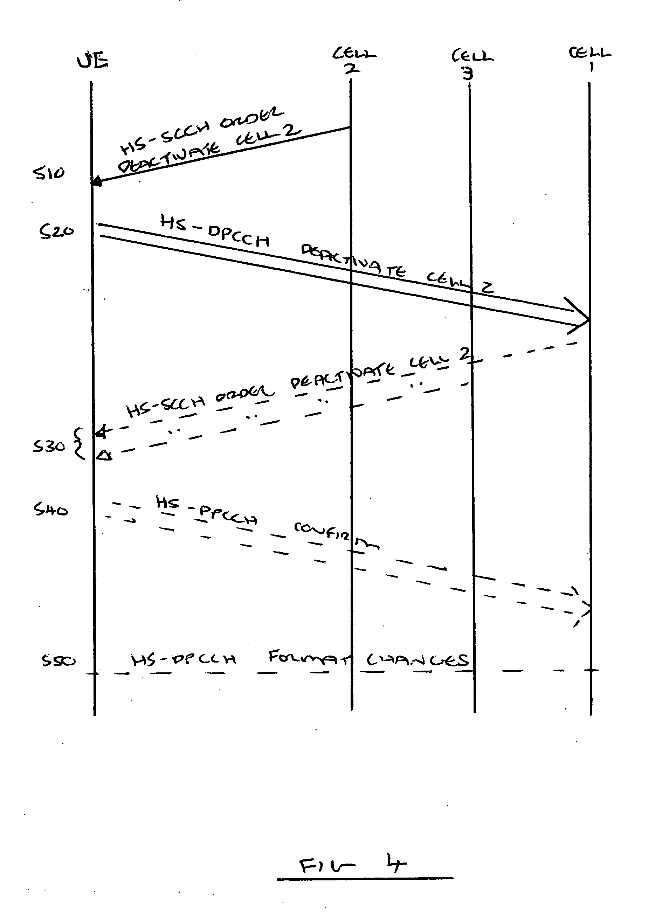

Referring now to Figure 4, at step S 10, Cell 2 sends an HS-SCCH order to deactivate itself and stops sending HSDPA packets to the user equipment. The user equipment receiving the HS-SCCH order stops receiving HSDPA packets from Cell 2.

At step S20, in the following four transmission time intervals, the user equipment transmits on the HS-DPCCH with the feedback parameters shown in Table 1 below.

**Table 1**

| **The *i*^{th} TTI after order** | **Cell 1** | | **Cell 2** | | **Cell 3** | |
|---|---|---|---|---|---|---|
| | **ACK/NACK** | **CQI** | **ACK/NACK** | **CQI** | **ACK/NACK** | **CQI** |
| 1^{st} | Normal | Normal | PRE | 0 | Normal | Normal |
| 2^{nd} | Normal | Normal | POST | 30 | Normal | Normal |
| 3^{rd} | Normal | Normal | PRE | 0 | Normal | Normal |
| 4^{th} | Normal | Normal | POST | 30 | Normal | Normal |

As can be seen, in each transmission time interval, HS-DPCCH carries feedback parameters for Cell 1, Cell 2 and Cell 3. The user equipment continues to receive HSDPA packets from Cell 1 and Cell 3.

Accordingly, for Cell 1 and Cell 3, the user equipment sends the normal feedback relating to those received HSDPA packets in each transmission time interval. In particular, the user equipment sends an ACK/NACK and the CQI in accordance with its measurements based on the HSDPA packets received. As such, the format for HS-DPCCH remains unchanged and those parameters related to Cells 1 and 3 are unaffected.

However, for Cell 2, the user equipment transmits a special sequence of ACK/NACK and CQI values. In particular, in the first transmission time interval after receipt of the HS-SCCH order, the user equipment transmits the combination of PRE and CQI=0. In the second transmission time interval, the user equipment transmits the combination of POST and CQI=30. In the third transmission time interval, the user equipment transmits PRE and CQI=0. In the fourth transmission time interval, the user equipment transmits POST and CQI=30. This sequence of combined parameters is selected to have a low probability of occurring in normal operation. Accordingly, this sequence of combined parameters can be used to indicate a change in the activation of Cell 2 and, in this example, indicates a deactivation of Cell 2.

Cell 1 and Cell 3 recognise this sequence and change their HS-DPCCH decoding format after the fourth transmission time interval. The user equipment will also change its HS-DPCCH format to send feedback for two cells (instead of three cells) after the fourth transmission time interval.

Alternatively, at step 30, as shown in Figure 4, after the fourth transmission time interval, Cells 1 and 3 can acknowledge the change to the activation status of Cell 2 by sending an HS-SCCH order to deactivate Cell 2. After receiving those additional HS-SCCH orders, the user equipment may then change its HS-DPCCH format either immediately or after a predetermined time. Likewise, even without the additional step of waiting for acknowledgements, each of the user equipment, Cell 1 and Cell 3 may change their HS-DPCCH format at a predetermined time after the fourth transmission time interval.

Yet further alternatively, at step S40, the user equipment following receipt of the acknowledgements, may transmit a further indication on the HS-DPCCH with the feedback parameters confirming that the reconfiguration should change either immediately or after a predetermined amount of time. After sending that further indication, the user equipment may then change its HS-DPCCH format either immediately or after a predetermined time, as shown in step S50. Likewise, Cell 1 and Cell 3 may change their HS-DPCCH format either immediately or after a predetermined time.

### Example 2

Again, considering the arrangement shown in Figure 3 where the user equipment is operating in MP-HSDPA with Cell 1 as the primary serving cell, Cell 2 as the secondary serving cell and Cell 3 as a secondary serving cell. Cell 1 sends an HS-SCCH order to deactivate Cell 2. The user equipment receiving the order will stop receiving HSDPA packets from Cell 2.

In a manner similar to Example 1 above, the user equipment sends the HS-DPCCH code word encoded in the parameters for Cell 2 over the four transmission time intervals as shown in Table 1 above.

Initially, Cell 2 is unaware that it has been deactivated by Cell 1 and continues to send HSDPA packets to the user equipment. After detecting the sequence of combined ACK/NACK and CQI parameters shown in Table 1, Cell 2 realises that it has been deactivated and stops sending HSDPA packets to the user equipment after the fourth transmission time interval.

In the same manner as that described for Example 1 above, the user equipment and Cells 1 and 3 change their HS-DPCCH format to the format for a two-cell feedback.

### Example 3

This example illustrates a method showing how to indicate the activation/deactivation status of a secondary serving cell. Again, having regard to Figure 3, this example assumes the user equipment is able to operate using MP-HSDPA with Cell 1 as a primary serving cell, Cell 2 as a secondary serving cell, and Cell 3 as a secondary serving cell. In this example, initially Cell 1 is activated, whilst Cell 2 and Cell 3 are deactivated.

In this situation, the HS-DPCCH format is configured to provide feedback for just one cell (the primary serving cell, Cell 1). Accordingly, Tables 2a to 2c below show a sequence of combinations of feedback parameters which can be used to indicate the activation status of Cells 2 and 3. It will be appreciated that a longer or different sequence of combinations may be used.

**Table 2a**

| **The *i*^{th} TTI after order** | **Cell 2** | **Active** | |
|---|---|---|---|
| | **Cell 3** | **Inactive** | |
| | | **ACK/NACK** | **CQI** |
| 1^{st} | | PRE | 0 |
| 2^{nd} | | POST | 30 |
| 3^{rd} | | PRE | 30 |
| 4^{th} | | POST | 0 |

**Table 2b**

| **The *i*^{th} TTI after order** | **Cell 2** | **Inactive** | |
|---|---|---|---|
| | **Cell 3** | **Active** | |
| | | **ACK/NACK** | **CQI** |
| 1^{st} | | PRE | 0 |
| 2^{nd} | | POST | 30 |
| 3^{rd} | | POST | 0 |
| 4^{th} | | PRE | 30 |

**Table 2c**

| **The *i*^{th} TTI after order** | **Cell 2** | **Active** | |
|---|---|---|---|
| | **Cell 3** | **Active** | |
| | | **ACK/NACK** | **CQI** |
| 1^{st} | | PRE | 0 |
| 2^{nd} | | POST | 30 |
| 3^{rd} | | PRE | 30 |
| 4^{th} | | PRE | 30 |

In particular, Table 2a indicates a sequence of combined feedback parameters which indicate that Cell 2 is to be activated, whilst Cell 3 remains inactive. Table 2b indicates a sequence of combined feedback parameters which indicate that Cell 2 should remain inactive, whilst Cell 3 is activated. Finally, Table 2c shows a sequence of combined feedback parameters which indicates that both Cells 2 and 3 should be activated.

In these examples, whatever the deactivation sequence, the sequence always starts with a PRE and CQI=0 followed by a POST and CQI=30 to indicate that information relating to the activation status of the secondary carriers is being provided. Whilst this sequence of combined feedback parameters is being sent, the user equipment will not receive any HSDPA packets from the primary serving cell, Cell 1, and Cell 1 should not send any HSDPA packets to the user equipment.

Considering the situation where Cell 1 wishes to activate Cell 2. Cell 1 sends an HS-SCCH order to activate Cell 2. However, at this time Cell 2 is unaware of the HS-SCCH order. Since Cell 2 is already configured to operate as one of the MP-HSDPA cells for this user equipment, it will listen for transmissions on the HS-DPCCH. To enable Cell 2 to apply a DRX whilst being inactive, a DTX can be applied to those HS-DPCCH transmissions for Cell 2.

Accordingly, after receiving the HS-SCCH order, the user equipment sends the special HS-DPCCH sequence shown in Table 2a to activate Cell 2. Because only one cell is active, the user equipment sends the HS-DPCCH sequence using the HS-DPCCH format for one cell. This sequence indicates that Cell 2 is to be activated and that Cell 3 remains inactive.

As mentioned above, Cell 2 detects this sequence of combined feedback and identifies this as an instruction to activate. Accordingly, after the fourth transmission time interval, Cell 2 starts transmitting HSDPA packets to the user equipment. In a similar manner to that described for Example 1 above, Cell 1 and Cell 2 change their HS-DPCCH format to match that for two cells. Likewise, Cell 2 uses an HS-DPCCH format for two cells. It will be appreciated that the same timing of the change in the HS-DPCCH format and the use of acknowledgements as that mentioned for Example 1 above may also be used in this example.

Sometime later, Cell 2 issues an HS-SCCH order to activate Cell 3. Again, Cell 3 is unaware of this activation. After receiving the HS-SCCH order, the user equipment sends the HS-DPCCH feedback sequence shown in Table 3 below.

**Table 3**

| **The *i*^{th} TTI after order** | **Cell 1** | | **Cell 2** | |
|---|---|---|---|---|
| | **ACK/NACK** | **CQI** | **ACK/NACK** | **CQI** |
| 1^{st} | PRE | 0 | PRE | 0 |
| 2^{nd} | POST | 30 | POST | 30 |
| 3^{rd} | PRE | 30 | PRE | 30 |
| 4^{th} | PRE | 30 | PRE | 30 |

Because only two cells are active prior to the transmission of the HS-SCCH order, the user equipment needs to continue to use the HS-DPCCH format for two cells (otherwise the existing active cells will wrongly decode the HS-DPCCH feedback). In this example, the sequence of combined feedback parameter values shown in Table 2c are transmitted as feedback for Cell 1 and Cell 2 within HS-DPCCH.

After the fourth transmission time interval, Cell 3 starts sending HSDPA packets to the user equipment. Also, Cell 1, Cell 2 and the user equipment then change their HS-DPCCH format to feedback for three cells. Likewise, Cell 3 uses an HS-DPCCH format for feedback from three cells. It will be appreciated that the same timing of the change in the HS-DPCCH format and the use of acknowledgements as that mentioned for Example 1 above may also be used in this example.

In this example, because the sequence shown in Table 2c is transmitted by the parameters used for both Cell 1 and Cell 2, neither Cell 1 nor Cell 2 can transmit any HSDPA packets to the user equipment whilst the sequence of combined feedback parameters is being sent. However, it will be appreciated that an embodiment can be provided where the sequence of combined feedback parameters is only sent for one of the cells. For example, Cell 1 may continue to transmit HSDPA packets and the user equipment may transmit normal ACK/NACK and CQI feedback parameters in response to those received HSDPA packets, or vice-versa, as shown in Table 4 below.

**Table 4**

| **The i^{th} TTI after order** | **Cell 1** | | **Cell 2** | |
|---|---|---|---|---|
| | **ACK/NACK** | **CQI** | **ACK/NACK** | **CQI** |
| 1^{st} | normal | normal | PRE | 0 |
| 2^{nd} | normal | normal | POST | 30 |
| 3^{rd} | normal | normal | PRE | 30 |
| 4^{th} | normal | normal | PRE | 30 |

In embodiments, an inactivation period after the fourth transmission time interval can be used to allow both the user equipment and base stations to set up for the new secondary carrier configuration. This is similar to the existing MC-HSDPA where there would be a few transmission time intervals after an activation/deactivation HS-SCCH order where no HSDPA transmissions occur.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of reconfiguring carriers of a multi-carrier wireless communications network in which user equipment is operable to simultaneously communicate using carriers supported by different base stations, said method comprising the steps of:
determining, at user equipment, that a reconfiguration is required of carriers currently used to support communication between said user equipment and said different base stations; and
transmitting over an uplink between said user equipment and said different base stations a layer 1 message indicating said reconfiguration of carriers.

2. The method of claim 1, wherein the reconfiguration of carriers comprises one of an activation and a deactivation of at least one carrier used to support communication between the user equipment and the different base stations

3. The method of claim 1 or 2, wherein said layer 1 message is encoded in data provided by a High Speed Dedicated Physical Control Channel, said data indicating said reconfiguration of carriers.

4. The method of claim 3, wherein said layer 1 message is encoded as pre-configured values of parameters provided by said High Speed Dedicated Physical Control Channel which indicate said reconfiguration of carriers.

5. The method of claim 4, wherein said layer 1 message is encoded as a sequence of pre-configured values of parameters in said High Speed Dedicated Physical Control Channel which indicate said reconfiguration of carriers.

6. The method of claim any one of claims 3 to 5, wherein said layer 1 message is encoded in data provided by said High Speed Dedicated Physical Control Channel associated with a carrier to be reconfigured.

7. The method of any preceding claim, comprising the step of waiting for an acknowledgement from said different base stations indicating receipt of said layer 1 message prior to executing said reconfiguration of carriers.

8. The method of any preceding claim, comprising the step of transmitting a further layer 1 message to said different base stations indicating that said reconfiguration of carriers is to occur.

9. The method of any preceding claim, wherein at least one of said layer 1 message and said further layer 1 message provides an indication of when said reconfiguration of carriers is to occur.

10. The method of any preceding claim, wherein, when said different base stations are pre-configured to monitor for transmissions at pre-configured intervals, said step of transmitting occurs at at least one of said pre-configured intervals.

11. The method of any preceding claim, wherein said step of determining comprises receiving an High Speed Shared Control Channel order from a base station indicating said reconfiguration.

12. The method of claim 11, comprising the step of preventing transmission of an ACK/NACK by said user equipment in response to said High Speed Shared Control Channel order.

13. User equipment operable to simultaneously communicate using reconfigurable carriers supported by different base stations of a multi-carrier wireless communications network, said user equipment comprising:
determining logic operable to determine that a reconfiguration is required of carriers currently used to support communication between said user equipment and said different base stations; and
transmission logic operable to transmit over an uplink between said user equipment and said different base stations a layer 1 message indicating said reconfiguration of carriers.

14. A method of reconfiguring carriers of a multi-carrier wireless communications network in which user equipment is operable to simultaneously communicate using carriers supported by different base stations, said method comprising the steps of:
receiving, at a base station over an uplink from said user equipment to said base station, a layer 1 message indicating said reconfiguration of carriers.

15. A base station operable to reconfigure carriers of a multi-carrier wireless communications network in which user equipment is operable to simultaneously communicate using carriers supported by different base stations, said base station comprising:
reception logic operable to receive over an uplink from said user equipment to said base station, a layer 1 message indicating said reconfiguration of carriers.
